# EUROPÄISCHE PATENTSCHRIFT

(11) **EP 2 808 751 B1**
(45) Veröffentlichungstag und Bekanntmachung des Hinweises auf die Patenterteilung: **08.04.2020**
(21) Anmeldenummer: 13169842.5
(22) Anmeldetag: 30.05.2013
(51) Int. Cl.: G05D 16/04

(54) **Druckminderer mit Absperrventil**
Pressure reduction device with check valve
Dispositif de réduction de pression avec vanne d'arrêt

(43) Veröffentlichungstag der Anmeldung: 03.12.2014
(73) Patentinhaber: Georg Fischer JRG AG, 4450 Sissach (CH)
(72) Erfinder: Bürli, Stephan, 4402 Frenkendorf (CH); Wespisser, Frédéric, 68640 Muespach (FR)
(74) Vertreter: Fenner, Seraina

(56) Entgegenhaltungen:
- EP-A1- 2 306 257
- WO-A1-2006/022455
- WO-A1-2012/010817
- CH-A5- 691 503
- DE-A1- 4 414 014
- US-A- 4 637 439

## Beschreibung

Die Erfindung betrifft einen Druckreduziervorrichtung für flüssige und gasförmige Medien, enthaltend ein Gehäuse mit einem Einlass und Auslass, eine Absperrvorrichtung und eine Druckpatrone enthaltend ein Patronengehäuse, eine Schieberhülse, einen Schieber, eine Basisscheibe und eine Ventileinrichtung bestehend aus einem Ventilsitz der am Schieber angeordnet ist und einer Dichtung, welche an der Basisscheibe angeordnet ist.

Druckreduzierventile werden hauptsächlich in Zufuhrleitungen der häuslichen und industriellen Wasserversorgung eingebaut, jedoch sind auch andere Einsatzgebiete bekannt wie Pressluftnetze usw. Sie haben die Funktion den höheren Druck im primärseitigen Verteilnetz auf einen optimalen Druck für den sekundärseitigen Abnehmerstrang zu reduzieren wodurch Armaturen und Verbraucher im Abnehmerstrang vor zu hohen Drücken geschützt werden. Zudem wird die Geräuschentwicklung im Abnehmerstrang vermindert und der Wasserverbrauch reduziert.

In der DE 26 01 350 ist ein entsprechendes Druckminderventil beschrieben wie auch in der CH 691 503 A5. Nachteilig an diesen Druckreduzierventilen ist, dass keine Absperrung möglich ist. Sollte ein solches Ventil bzw. seine auswechselbare Einheit ausgetauscht werden müssen, muss die komplette Wasserversorgung unterbrochen werden indem beispielweise die Hauptzuleitung abgesperrt wird, wodurch bei weiteren Verbrauchen am selben Versorgungsnetz, beispielweise in einem Mehrfamilienhaus, die Wasserzufuhr ebenfalls unterbrochen wird. Alternativ kann ein separates Ventil in den entsprechenden Abnehmersträngen vor dem Reduzierventil eingebaut werden um die Wasserzufuhr nur im entsprechenden Strang zu unterbrechen, wodurch eine gesamte Absperrung der Wasserversorgung des Versorgungsnetzes im selben Haus vermieden werden kann, jedoch bedarf es eines zusätzlichen Ventils, was weitere Kosten verursacht.

Die DE 44 14 014 A1 offenbart eine Vorrichtung zur Versorgung eines Verbrauchers mit Druckgas oder Vakuum, die ein Reduzierventil wie auch eine Absperrvorrichtung aufweist, wobei eine rasche Auswechslung des Reduzierventils nicht möglich ist.

Die DE 26 01 349 offenbart ein eine Ventilanordnung, in welcher es möglich ist in einem Ventilgehäuse eine Absperrvorrichtung sowie ein Druckreduzierventil vorzusehen. Wobei die Anordnung der beiden Ventile nebeneinander erfolgt und durch den Einbau der Unterputz erfolgt, ist eine grosse Bohrung für die Zugänglichkeit des Ventils vorzusehen.

Es ist Aufgabe der Erfindung eine Druckreduziervorrichtung vorzusehen, die unabhängig von der Reduziereinheit absperrbar ist insbesondere im Fall einer Auswechslung der Druckreduziereinheit bzw. Druckpatrone und dass die Bauform kompakt ist und eine einfache Montage ermöglicht.

Diese Aufgabe wird erfindungsgemäss dadurch gelöst, dass die Absperrvorrichtung und die Druckpatrone koaxial angeordnet sind, wobei in geöffnetem Zustand der Druckreduziervorrichtung das Medium zuerst die Absperrvorrichtung und anschliessend die Ventileinrichtung der Druckpatrone durchströmt.

Die Absperrvorrichtung ist koaxial bzw. konzentrisch unterhalb der Druckpatrone im Gehäuse der Druckreduziervorrichtung angeordnet und liegt dadurch auf derselben Mittelachse. Die Absperrvorrichtung weist eine Feder und einen Kegel auf. Die Feder ist in einem Federteller angeordnet, welcher die Feder im Gehäuse positioniert.

Das Medium strömt durch den Einlass des Ventils in Richtung Absperrvorrichtung, die damit sie geöffnet ist betätigt werden muss bzw. der Kegel aktiv gegen die Feder gedrückt werden muss. Dadurch wird das Hindurchströmen ermöglicht. Wird die Absperrvorrichtung nicht betätigt ist die Druckreduziervorrichtung geschlossen und das Medium kann nicht hindurchströmen. Die Betätigung erfolgt mittels eine Betätigungselements, dadurch wird die Feder über den Kegel zusammengedrückt und die Absperrvorrichtung geöffnet. Vorzugsweise dient die Druckpatrone bzw. die daran angeordnete Schiebehülse dazu die Feder über den Kegel zusammen zu drücken und dadurch das Ventil zu öffnen.

Es können auch andere Elemente als Betätigungselement eingesetzt werden. Um beispielsweise bei der Inbetriebnahme der Wasserinstallation in einem Haus die Druckprüfung durchzuführen, wird die Druckpatrone aus der Druckreduziervorrichtung entfernt, da eine solche Druckprüfung ohne Druckverminderungseinheit erfolgen soll, und an dessen Stelle ein Bypass-Stopfen montiert um die Absperrvorrichtung zu betätigen. Diese übernimmt dann das Zusammendrücken der Feder und ermöglicht den Durchfluss des Mediums.

Im Normalbetrieb ist die Druckpatrone im Gehäuse montiert und drückt, wie bereits zuvor beschrieben die Feder zusammen um die Absperrvorrichtung zu öffnen. Die Druckpatrone entspricht einer aus dem Stand der Technik bekannten Patrone, die für den Einsatz von herkömmlichen Druckreduzierventilen geeignet ist, auf die genaue Funktionsweise dieser Patrone wird in den Ausführungsbeispielen Bezug genommen. Die Druckpatrone wird in das Gehäuse hinein geschraubt bis die Patrone mit der Schulter an der Buchse ansteht, dadurch ist gewährleistet, dass die Absperrvorrichtung geöffnet ist. Diese Art der Absperrvorrichtung dient ausschliesslich der kompletten Öffnung oder der kompletten Schliessung, eine Zwischenstellung ist nicht vorgesehen. Das einströmende Medium strömt zwischen dem Kegel, an welchem sich vorzugsweise eine auf-vulkanisierte Dichtung befindet und der Buchse, die im Gehäuse angeordnet ist, vorbei. In geschlossenem Zustand dichtet die Dichtung an der Buchse in dem der Kegel über die Feder an die Buchse gedrückt wird und sperrt bzw. schliess dadurch das Ventil. Alternativ wäre auch ein direktes Andrücken der Dichtung an das Gehäuse denkbar, wodurch ebenfalls die gewünschte Dichtwirkung erreicht würde.

Die Druckpatrone wird in die Buchse bis zum Anschlag hineingeschraubt, selbstverständlich sind alternative Verbindungsmöglichkeiten wie Schnellverschlüsse auch denkbar. Die Dichtungen, welche am Patronengehäuse angeordnet sind dichten das System ab. Vorzugsweise sind mehrere Dichtungen am Patronengehäuse angeordnet und befinden sich an unterschiedlichen Durchmessern. In geöffneter Stellung der Absperrvorrichtung strömt das Medium durch die Schieberhülse hindurch, welche vorzugsweise eine Hülse ist, die grosse Öffnungen aufweist und von einem Geflecht umgeben ist, das als Filter dient. Darauf gelangt es in den Schieber und strömt durch die Ventileinrichtung, welche durch den Ventilsitz am Schieber und die Dichtung an der Basisscheibe gebildet wird hindurch.

Sollte nun die Leitung abgesperrt werde, wird die komplette Druckpatrone aus dem Gehäuse hinaus geschraubt bzw. soweit hinaus geschraubt bis die obere Schulter der Druckpatronen bzw. des Patronengehäuses durch die Sicherheitshülse begrenzt wird. Die Sicherheitshülse ist vorzugsweise aus Kunststoff hergestellt und wird in die Nut im Gehäuse eingehackt. Dies ist die durch die flexible Gestalt der Sicherheitshülse möglich. Der Konus mit den darin verlaufenden Nuten lässt sich so komprimieren, dass die Sicherheitshülse in den Innendurchmesser des Gehäuses einfahrbar ist und sich dann in der Nut wieder ausbreitet und dadurch in der Nut einrastet. Die Schulter der Sicherheitshülse dient dadurch als Begrenzung der Druckpatrone beim Herausdrehen, so dass die Patrone nicht so weit herausgedreht werden kann, dass sie herausfallen könnte aber dennoch so weit, dass mit Sicherheit die Feder der Absperrvorrichtung nicht mehr zusammen gedrückt wird und das Ventil bzw. die Druckreduziervorrichtung durch die Absperrvorrichtung gesperrt ist. Wichtig hierbei ist der durch die Schulter der Sicherheitshülse gebildete Anschlag. Die weitere Formgestaltung der Sicherheitshülse dient der einfachen Montage, die mittels eines einfachen Werkzeugs wie beispielsweise durch ein Rohr oder eine Hülse, durchführbar ist. Jedoch kann auch ein einfacher Sicherheitsring als Hubbegrenzung eingesetzt werden, wobei die Montage durch die Notwendigkeit von Montagewerkzeug und die schlechte Zugänglichkeit bei der Unterputzinstallation nicht komfortabel ist.

Die Druckreduziervorrichtung wird hauptsächlich bei Unterputzinstallationen eingesetzt aber ist auch bei sichtbaren Rohrleitungen einbaubar.

Falls die Druckpatrone defekt ist, kann diese problemlos gewechselt werden. Dazu ist die Sicherheitshülse zu entfernen, welche den Hub der Druckpatrone limitiert. Das ermöglicht ein Herausschrauben der Druckpatrone. Vorzugsweise weist die Druckpatrone ein Linksgewinde auf, welches dem Hinein-und Herausschrauben der Patrone ins Gehäuse dient, da der Deckel, welcher das Druckpatronengehäuse verschliesst ein Rechtsgewinde aufweist. Dadurch wird sichergestellt, dass beim Herausschrauben der Patrone die komplette Patrone herausgedreht wird und nicht nur der Deckel, was ansonsten zur Folge haben könnte, dass fälschlicher Weise angenommen wird, dass die komplette Patrone an der Schulter der Sicherheitshülse ansteht und somit bedeuten würde, dass die Absperrung erfolgt wäre. Jedoch wurde nur der Deckel hinausgedreht und die Absperrung ist noch geöffnet und die Leitung wird noch mit dem Medium durchströmt. Selbstverständlich ist auch eine umgekehrte Rechts-Linksgewinde Anordnung bezüglich dem Gehäuse und der Druckpatrone sowie dem Deckel möglich.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt durch eine Druckreduziervorrichtung in Normalbetriebsstellung,
- Fig. 2: einen Längsschnitt durch eine Druckreduziervorrichtung in Absperrstellung und
- Fig. 3: einen Längsschnitt in Prüfbetriebsstellung mit Bypass-Stopfen.

Die Druckreduziervorrichtung 1 weist ein Gehäuse 8 auf, welches vorzugsweise aus Rotguss gefertigt ist. Darin angeordnet ist eine Absperrvorrichtung 2, welche der kompletten Absperrung der Druckreduziervorrichtung 1 dient. Die Absperrvorrichtung 2 weist einen Federteller 5, eine Feder 4, einen Kegel 3 und eine am Kegel 3 angeordnete Dichtung 6 auf. Im Gehäuse 8 angeordnet ist zudem eine Buchse 7, welche einerseits der Aufnahme der Druckpatrone 9 dient sowie der Bildung der Dichtgeometrie für die Absperrvorrichtung 2. Die Buchse 7 wird in das Gehäuse 8 eingeschraubt. Um zu vermeiden, dass das Medium über das Gewinde der Buchse 7 in den erweiterten Ventilraum 22 gelangt ist an der Buchse 7 eine Dichtung 23 angeordnet vorzugsweise ein O-Ring. Die Buchse 7 und der Federteller 5 bilden eine Einheit und können aus dem gleichen Rohteil gefertigt werden.

Die Druckreduziervorrichtung 1 enthält des Weiteren eine Druckerpatrone 9, die aus dem Stand der Technik bekannt ist, welche für die Druckregelung auf der Sekundärseite bzw. im Abnehmerstrang verantwortlich ist. Die Druckpatrone 9 und die darunter angeordnete Absperrvorrichtung 2 liegen auf derselben Mittelachse 36 bzw. sind koaxial angeordnet, wodurch eine kompakte Bauform erzielt wird. Die Druckpatrone 9 enthält ein Druckpatronengehäuse 18, welches aus einem Unterteil 19 und einem Deckel 20 gebildet wird. Vorzugsweise sind die beiden Teile durch ein Gewinde miteinander verbunden. Zudem weist die Druckpatrone 9 eine Schieberhülse 10 auf. Die Schieberhülse 10 weist grössere Aussparungen auf, welche dem Medium das seitliche Einströmen in die Druckpatrone 9 ermöglichen. Vorzugsweise wird die Schieberhülse 10 von einem Geflecht umgeben, das als Filter dient. Die Druckpatrone 9 weist eine Baugruppe auf, die sich aus einem Membrandeckel 24, einer Mutter 25, einer Trägerplatte 26, einer Basisscheibe 15, einer Dichtung 13, einem Schieber 14, Distanzelementen 27 und einer Membrane 29 zusammensetzt. Die Anordnung des Schiebers 14 zur Dichtung 13 bildet den Ventilsitz 12, welcher durch die Bewegung des Schiebers 14 geöffnet und geschlossen wird.

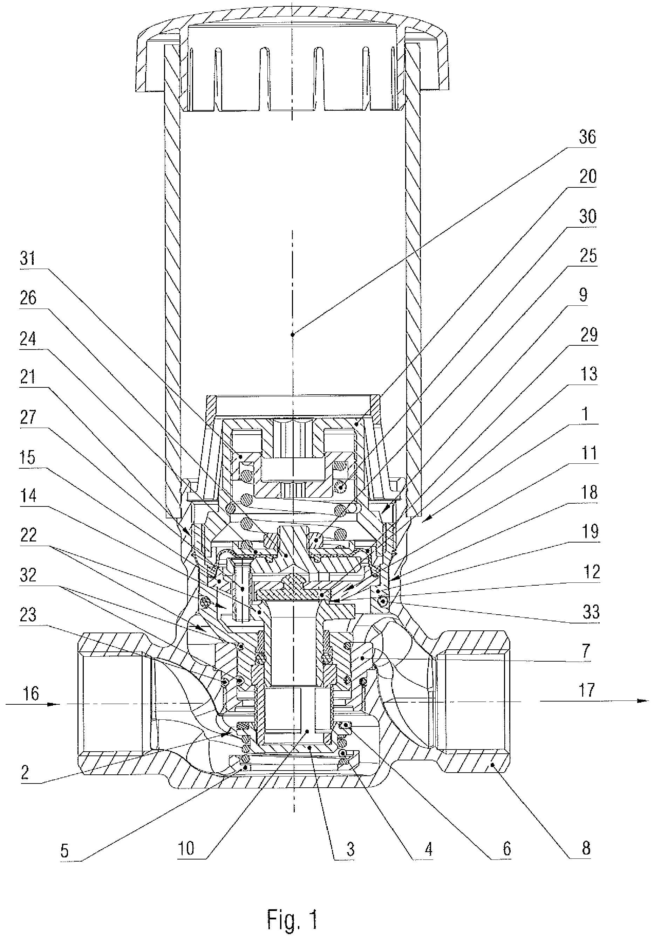

Der Schieber 14 ist durch die Distanzelemente 27 fest mit der Trägerplatte 26 verbunden und beanstandet, wobei der Abstand der beiden Teile mithilfe einer Hülse 28 an den Distanzelementen 27 realisiert wird. Zwischen dem Flansch des Schiebers 14 und der Trägerplatte 26 ist die Basisscheibe 15 angeordnet, welche Durchbrüche aufweist durch welche die Distanzelemente 27 ragen, zudem dienen die Durchbrüche als Durchlass für das Medium. Die Membrane 29 befindet sich zwischen Membrandeckel 24 und Trägerplatte 26. Das über den Einlass 16 der Druckreduziervorrichtung 1 strömende Medium, strömt an der geöffneten Absperrvorrichtung 2 vorbei durch die Schieberhülse 10 in den Schieber 14. Die Ventileinrichtung 11 ist geschlossen wenn der Ventilsitz 12 durch die Dichtung 13 abgedeckt ist, das erfolgt wenn der Druck auf der Sekundärseite und im erweiterten Ventilraum 22 über den eingestellten Sollwert von beispielsweise 3 bar liegt. Der sekundärseitige Mediumsdruck wirkt durch die Durchbrüche in der Basisscheibe 15 auf die Unterseite der Membrane 29. Die Membrane 29 wird dadurch nach oben gedrückt und zieht den Schieber 14 , welcher über die Distanzelemente 27 mit der Trägerplatte 26 verbunden ist nach oben, wodurch sich der Ventilsitz 12 schliesst indem der Schieber 14 an der Dichtung 13 ansteht. Der gewünschte Druck auf der Sekundärseite wird über das Einstellen der Feder 30 mit Hilfe der Einstellschraube 31 erzielt. Liegt der Druck auf der Sekundärseite und somit auch im erweiterten Ventilraum 22 unter dem Sollwert, senkt sich die Membrane 29, wodurch auch der Schieber 14 abgesenkt und der Ventileinrichtung 11 durch das Absenken des Schieber 14 geöffnet wird indem der Ventilsitz 12 nicht mehr an der Dichtung 13 anliegt. Die Dichtungen 32, 33 dichten die Kammern zueinander ab. In Fig. 1 ist die Druckreduziervorrichtung 1 im Normalbetrieb dargestellt. Das Medium kann durch den Einlass 16 hineinströmen an der Absperrvorrichtung 2 vorbei und wird dann durch die Druckpatrone 9 auf dem entsprechenden Druck für die Sekundärseite geregelt. Die Druckpatrone 9 wird auf Anschlag der Buchse 7 montiert wie in Fig. 1 ersichtlich, was durch in hineinschrauben in das Gehäuse 8 vorzugsweise mittels Linksgewinde erreicht wird. Durch den durch die Schulter der Buchse 7 gebildeten Anschlag ist die Einschraubtiefe limitiert. Die Schieberhülse 10, welche als Betätigungselement fungiert drückt die Absperrvorrichtung 2 bzw. die Feder 4 über den Kegel 3 zusammen und ermöglicht so dem Medium das Durchströmen in die Schieberhülse 10. Darauf folgt der, wie bereits zuvor beschriebene Regelvorgang der Druckpatrone 9 zur Regelung des Drucks sekundärseitig.

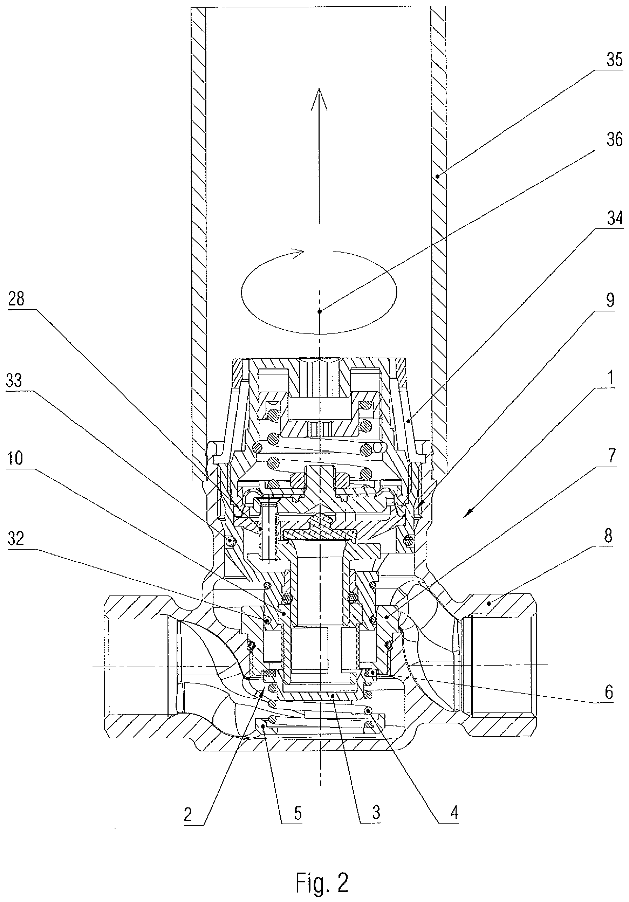

Fig. 2 zeigt die Druckreduziervorrichtung 1 mit geschlossener Absperrvorrichtung 2. Die Druckpatrone 9 wurde hinaus geschraubt bis auf Anschlag, der durch die Sicherheitshülse 34 gebildet wird, wie in Fig. 2 erkennbar. Dies dient der Sicherstellung, dass die Patrone 9 genug weit hinaus geschraubt wurde, so dass die Absperrvorrichtung 2 mit Sicherheit nicht mehr betätigt wird und dadurch die Feder 4 den Kegel 3 mit der daran angeordneten Dichtung 6 an die Buchse 7 drückt und dadurch den Durchgang sperrt.

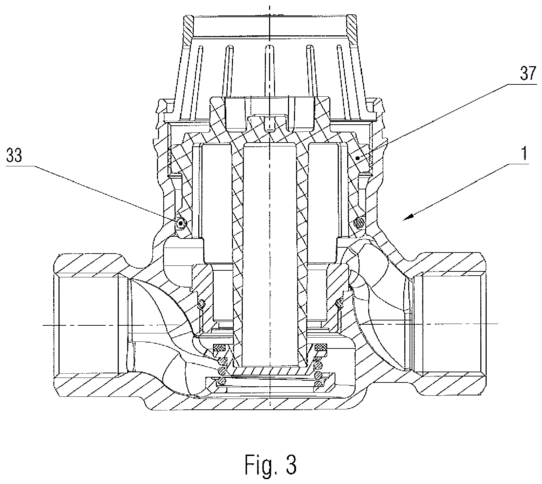

Bei einer Demontage der Druckpatrone 9 kann durch den flexiblen bzw. elastischen Aufbau der Sicherheitshülse 34 die Hülse zusammengedrückt und entfernt werden, und anschliessend die Patrone hinausgeschraubt werden. Die Abschlussvorrichtung 2 ist dann gesperrt. Nach der Installation der neuen Patrone 9 kann die Sicherheitshülse 34 auf dieselbe Art wieder eingebaut werden, indem sie zusammengedrückt wird und in die Nut im Gehäuse 8 einrastet. Der grosse Vorteil der erfindungsgemässen Druckreduziervorrichtung 1 besteht darin, dass das Medium durch kein weiteres separates Ventil abgesperrt werden muss sondern die Absperrvorrichtung 2 in derselben Druckreduziervorrichtung 1 angeordnet ist und durch kompakte die Anordnung der Absperrung der erfindungsgemässen Vorrichtung 1 nur eine Bohrung bei einer Unterputzinstallation von Nöten ist um das Ventil anzubringen. Das Schutzrohr 35 dient der Distanzüberbrückung bis zur Leitung bei Unterputzinstallationen. Die Dichtungen 32, 33 sind auch in Absperrposition bzw. herausgeschraubter Position der Druckpatrone 9 wie in Fig. 2 dargestellt noch im Eingriff und verhindern einen Mediumsaustritt. In Fig. 3 ist die Druckreduziervorrichtung 1 während der Druckprüfung des Leitungssystems dargestellt. Dazu wurde die Druckpatrone 9 durch den Bypass-Stopfen 37 ersetzt. Der Bypass-Stopfen 37 dient in diesem Fall als Betätigungselement um die Absperrung 2 in geöffneter Stellung zu halten.

### Bezugszeichenliste

- 1: Druckreduziervorrichtung
- 2: Absperrvorrichtung
- 3: Kegel
- 4: Feder
- 5: Federteller
- 6: Dichtung
- 7: Buchse
- 8: Gehäuse
- 9: Druckpatrone
- 10: Schieberhülse / Betätigungselement
- 11: Ventileinrichtung
- 12: Ventilsitz
- 13: Dichtung
- 14: Schieber
- 15: Basisscheibe
- 16: Einlass
- 17: Auslass
- 18: Druckpatronengehäuse
- 19: Unterteil
- 20: Deckel Druckpatronengehäuse
- 21: Gewinde
- 22: Erweiterter ventilraum
- 23: Dichtung
- 24: Membrandeckel
- 25: Mutter
- 26: Trägerplatte
- 27: Distanzelement
- 28: Hülse
- 29: Membrane
- 30: Feder
- 31: Einstellschraube
- 32: Dichtung
- 33: Dichtung
- 34: Sicherheitshülse
- 35: Schutzrohr
- 36: Mittelachse
- 37: Bypass-Stopfen

## Patentansprüche

1. Druckreduziervorrichtung (1) für flüssige und gasförmige Medien, enthaltend ein Gehäuse (8) mit einem Einlass (16) und Auslass (17), eine Absperrvorrichtung (2) und eine Druckpatrone (9) enthaltend ein Patronengehäuse (18), eine Schieberhülse (10), einen Schieber (14), eine Basisscheibe (15) und eine Ventileinrichtung (11) bestehend aus einem Ventilsitz (12) der am Schieber (14) angeordnet ist und einer Dichtung (13), welche an der Basisscheibe (15) angeordnet ist, wobei die Absperrvorrichtung (2) und die Druckpatrone (9) koaxial angeordnet sind, wobei in geöffnetem Zustand der Druckreduziervorrichtung (1) das Medium zuerst die Absperrvorrichtung (2) und anschliessend die Ventileinrichtung (11) der Druckpatrone (9) durchströmt, **dadurch gekennzeichnet, dass** die Absperrvorrichtung (2) mittels Schieberhülse (10) öffenbar ist.

2. Druckreduziervorrichtung (1) nach Anspruch 1, **dadurch gekennzeichnet, dass** die Druckreduziervorrichtung (1) bei unbetätigter Absperrvorrichtung (2) geschlossen ist.

3. Druckreduziervorrichtung (1) nach einem der Ansprüche 1 bis 2 **dadurch gekennzeichnet, dass** die Absperrvorrichtung (2) einen Kegel (3) sowie eine Druckfeder (4) aufweist.

4. Druckreduziervorrichtung (1) nach Anspruch 3 **dadurch gekennzeichnet, dass** am Kegel (3) eine Dichtung (6) angeordnet ist.

5. Druckreduziervorrichtung (1) nach einem der Ansprüche 1 bis 4 **dadurch gekennzeichnet, dass** die Druckreduziervorrichtung (1) eine Sicherheitshülse (34) aufweist.

## Claims

1. Pressure-reduction device (1) for liquid and gaseous media, having a housing (8) with an inlet (16) and outlet (17), having a shut-off device (2) and a pressure cartridge (9) containing a cartridge housing (18), and having a slide sleeve (10), a slide (14), a main plate (15) and a valve device (11), the latter comprising a valve seat (12), which is arranged on the slide (14), and a seal (13) which is arranged on the main plate (15), wherein the shut-off device (2) and the pressure cartridge (9) are arranged coaxially, wherein, in the open state of the pressure-reduction device (1), the medium flows first of all through the shut-off device (2) and then through the valve device (11) of the pressure cartridge (9), **characterized in that** the shut-off device (2) can be opened by means of the slide sleeve (10).

2. Pressure-reduction device (1) according to Claim 1, **characterized in that** the pressure-reduction device
(1) is in a closed state when the shut-off device
(2) has not been actuated.

3. Pressure-reduction device (1) according to either of Claims 1 and 2, **characterized in that** the shut-off device (2) has a cone (3) and a compression spring (4).

4. Pressure-reduction device (1) according to Claim 3, **characterized in that** a seal (6) is arranged on the cone (3).

5. Pressure-reduction device (1) according to one of Claims 1 to 4, **characterized in that** the pressure-reduction device (1) has a safety sleeve (34).

## Revendications

1. Dispositif de réduction de pression (1) destiné à des milieux liquides et gazeux, ledit dispositif contenant un boîtier (8) pourvu d'une entrée (16) et d'une sortie (17), un dispositif de blocage (2) et une cartouche d'impression (9) contenant un boîtier de cartouche (18), un manchon de coulisseau (10), un coulisseau (14), une plaque de base (15) et un moyen formant soupape (11) comprenant un siège de soupape (12), qui est disposé au niveau du coulisseau (14), et un joint (13) qui est fixé à la plaque de base (15), le dispositif de blocage (2) et la cartouche sous pression (9) étant disposés coaxialement, lorsque le dispositif de réduction de pression (1) est ouvert le fluide s'écoulant d'abord à travers le dispositif de blocage (2) puis à travers le moyen formant soupape (11) de la cartouche sous pression (9), **caractérisé en ce que** le dispositif de blocage (2) peut être ouvert au moyen d'un manchon de coulisseau (10).

2. Dispositif de réduction de pression (1) selon la revendication 1, **caractérisé en ce que** le dispositif de réduction de pression (1) est fermé lorsque le dispositif de blocage (2) n'est pas actionné.

3. Dispositif de réduction de pression (1) selon l'une des revendications 1 à 2, **caractérisé en ce que** le dispositif de blocage (2) comporte un cône (3) et un ressort de compression (4).

4. Dispositif de réduction de pression (1) selon la revendication 3, **caractérisé en ce qu'**une garniture d'étanchéité (6) est disposée au niveau du cône (3).

5. Dispositif de réduction de pression (1) selon l'une des revendications 1 à 4, **caractérisé en ce que** le dispositif de réduction de pression (1) comporte un manchon de sécurité (34).
